Europäisches Patentamt

European Patent Office

Office européen des brevets

(11) Veröffentlichungsnummer: **0 143 359**
**A1**

# EUROPÄISCHE PATENTANMELDUNG

(21) Anmeldenummer: 84113165.9

(51) Int. Cl.⁴: **H 02 M 3/335**

(22) Anmeldetag: 02.11.84

(30) Priorität: **12.11.83 DE 3341074**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **TELEFUNKEN Fernseh und Rundfunk GmbH, Göttinger Chaussee 76, D-3000 Hannover 91 (DE)**

(72) Erfinder: **von der Ohe, Wilfried, Holtenser Weg 35, D-3257 Springe 5 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

(54) Schaltnetzteil, insbesondere für einen Fernsehempfänger, mit einer Schutzschaltung zur Begrenzung des Primärstroms.

(57) Schaltnetzteil, insbesondere für einen Fernsehempfänger mit Bereitschaftsbetrieb, mit Mitteln zum Schutz gegen zu hohen Strom auf der Primärseite und zu hoher Spannung auf der Sekundärseite. Erfindungsgemäß ist auf der Primärseite ein Thyristor (36) vorgesehen, der bei einem zu hohen Strom auf der Primärseite den Schalttransistor (6) periodisch sperrt.

EP 0 143 359 A1

Schaltnetzteil, insbesondere für einen Fernsehempfänger, mit einer Schutzschaltung zur Begrenzung des Primärstroms

Bei Geräten der Nachrichtentechnik wie z.B. einem Fernsehempfänger ist es bekannt, die für die einzelnen Stufen notwendigen Betriebsspannungen mit einem Schaltnetzteil aus der Netzspannung zu erzeugen (Funkschau 1975, Heft 5, Seite 40-43). Ein Schaltnetzteil ermöglicht die für den Anschluß äußerer Geräte und für die Maßnahmen zur Schutzisolierung vorteilhafte galvanische Trennung der Empfängerschaltung vom Netz. Da ein Schaltnetzteil mit einer gegenüber der Netzfrequenz hohen Frequenz von ca. 30 kHz arbeitet, kann der zur galvanischen Trennung dienende Trenntransformator gegenüber einem Netztrafo für 50 Hz wesentlich kleiner und leichter ausgebildet sein. Durch mehrere Wicklungen oder Wicklungsabgriffe sowie daran angeschlossene Gleichrichter können auf der Sekundärseite des Trenntransformators Spannungen unterschiedlicher Größe und Polarität erzeugt werden. Durch eine auf der Primärseite vorgesehene Regelschaltung wird die Amplitude dieser Spannungen stabilisiert.

Die Amplitude der Ströme auf der Primärseite und der Spannungen auf der Sekundärseite wird im wesentlichen durch die genannte Regelschaltung bestimmt. Wenn in dieser Regelschaltung ein Fehler auftritt, z.B. durch Ausfall eines Bauteils, kann das Schaltnetzteil in einen undefinierten Zustand gelangen und auf der Primärseite unzulässig hohe Ströme und auf der Sekundärseite unzulässig hohe Spannungen erzeugen. Dadurch können weitere Bauteile des Schaltnetzteils und insbesondere die angeschlossenen Verbraucher gefährdet sein.

Zur Begrenzung des Primärstroms ist es bekannt, an die Steuerelektrode eines den primärseitigen Schalttransistor steuernden Thyristors eine Begrenzerschaltung mit einer Zenerdiode anzuschalten, die die Vorspannung an der Steuerelektrode des Thyristors und damit den davon abhängigen Maximalwert des Primärstromes begrenzt.Diese Schutzschaltung
wirkt also auf die primärseitige Regelschaltung ein. Die
einwandfreie Funktion der Regelschaltung und der Schutzschaltung ist somit von dem einwandfreien Verhalten verschiedener
Bauteile abhängig. Wenn ein Bauteil, z.B. ein Koppelkondensator zwischen dem Thyristor und dem Schalttransistor, ausfällt, sind die Regelschaltung und damit die Schutzschaltung
nicht mehr wirksam. Das Schaltnetzteil kann dann in einen
undefinierten Zustand gelangen und auf der Sekundärseite unzulässig hohe Betriebsspannungen erzeugen.

Der Erfindung liegt die Aufgabe zugrunde, eine einfache
Schutzschaltung zu schaffen, die weitestgehend unabhängig
von dem einwandfreien Zustand der primärseitigen Bauteile
arbeitet.

Diese Aufgabe wird durch die im Anspruch 1 beschriebene Erfindung gelöst. Vorteilhafte Weiterbildungen der Erfindung
sind in den Unteransprüchen beschrieben.

Bei der erfindungsgemäßen Lösung erfolgt also in vorteilhafter Weise ein unmittelbarer Eingriff auf die Basis des
Schalttransistors, der nicht von der Regelschaltung abhängig ist. Die Abschaltung des Schalttransistors zur Vermeidung unzulässig hoher Ströme erfolgt also unabhängig von
der Funktion der Regelschaltung und ist somit auch dann
wirksam, wenn Bauteile innerhalb der Regelschaltung ausgefallen sind. Die Schaltung ist relativ einfach und benötigt
im wesentlichen nur einen zusätzlichen kleinen Thyristor.

Bei einer vorteilhaften Kombination mit einer bekannten
Schutzschaltung gemäß Anspruch 4 wird eine besonders
leistungsfreie Abschaltung im Störungsfall erreicht, weil
die Zenerdiode der bekannten Schutzschaltung eine schnelle
Umschaltung ohne Übergangsverhalten bewirkt. Dabei wird

0143359

die Leistungsaufnahme gering gehalten, weil die bekannte
Schutzschaltung und die erfindungsgemäße Schutzschaltung
zusammen stufenweise wirksam werden.

Gemäß einer vorteilhaften Weiterbildung der Erfindung gemäß den Ansprüchen 5-9 wird zusätzlich ein Schutz gegen
zu hohe sekundärseitig erzeugte Betriebsspannungen erreicht, die sonst insbesondere bei Ausfall der primärseitigen Regelschaltung nicht mehr kontrolliert sind und die
angeschlossenen Verbraucher gefährden können.

Ein Ausführungsbeispiel der Erfindung wird anhand der
Zeichnung erläutert. Darin zeigen
Figur 1 ein Schaltbild des erfindungsgemäß ausgebildeten
Schaltnetzteils,
Figur 2 Kurven zur Erläuterung der Wirkungsweise für verschiedene Betriebsarten und Störungsfälle und
Figur 3 eine Kurve zur Erläuterung der Wirkungsweise bei
angesprochener Schutzschaltung.

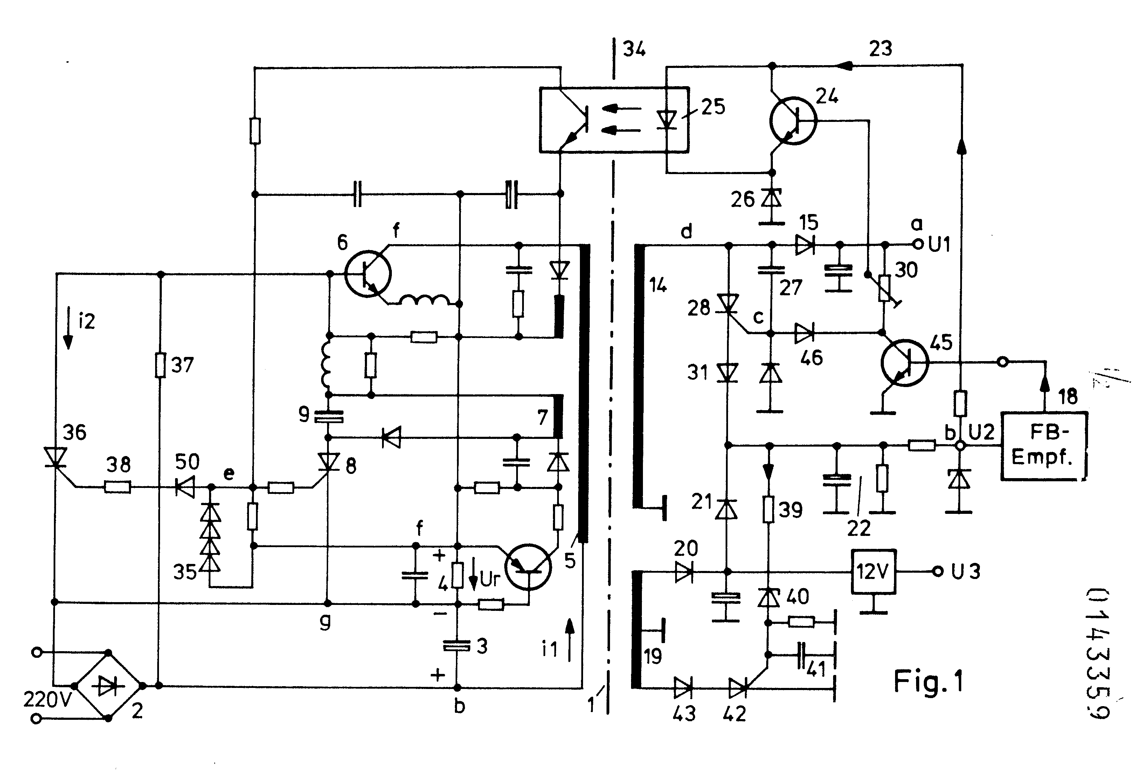

Das Schaltnetzteil gemäß Figur 1 enthält auf der Primärseite des Trenntransformators 1 den Netzgleichrichter 2,
den Ladekondensator 3, den Strom-Meßwiderstand 4, die
Arbeitswicklung 5, den Schalttransistor 6, die zur Schwingungserzeugung dienende Rückkopplungswicklung 7, den zur
periodischen Abschaltung des Transistors 6 dienenden
Thyristor 8 sowie den Koppelkondensator 9. Die Sekundärwicklung 14 liefert über den Gleichrichter 15 an der
Klemme a eine Betriebsspannung U1 von +150 V. Die Wicklung 19 liefert über den Gleichrichter 20 und die Diode
21 über das RC-Glied 22 an der Klemme b eine zweite Betriebsspannung U2 für den Fernbedienungsempfänger 18.
Die strichpunktierte Linie 34 deutet die galvanische
Trennstelle zwischen Netz- und Empfängerschaltung an. Im
folgenden werden verschiedene Betriebsarten für Normalbetrieb, Bereitschaftsbetrieb und Störungsfall beschrieben.

## Normalbetrieb

Der Fernbedienungsempfänger 18 versorgt über die Leitung 23 die Schaltung mit dem Transistor 24, dem Optokoppler 25 und der Zenerdiode 26 mit Betriebsspannung. Der Ausgang des Optokopplers 25 beeinflußt die Primärseite so, daß die volle Nennleistung übertragen wird und die Betriebsspannungen $U1$, $U2$, $U3$ ihre Nennwerte haben. Von dem Potentiometer 30 wird eine zu $U1$ proportionale Regelspannung abgenommen, die über den Transistor 24 und den Optokoppler 25 auf die Primärseite einwirkt und zur Stabilisierung der sekundärseitig erzeugten Betriebsspannungen dient. Der Fernbedienungsempfänger 18 schließt über den leitenden Transistor 45 und die leitende Diode 46 den Punkt c kurz, so daß die Impulsspannung am Punkt d nicht auf den Thyristor 28 gelangt. Der Thyristor 28 ist ohne Wirkung. Die zur Entkopplung dienende Diode 31 ist gesperrt.

## Bereitschaftsbetrieb

Der Fernbedienungsempfänger 18 liefert über die Leitung 23 keine Spannung, so daß der Transistor 24 und der Optokoppler 25 nicht mehr angesteuert werden. Der Optokoppler 25 überträgt keine Energie auf die Primärseite. Dadurch wird die Primärseite so umgeschaltet, daß nur noch die für Bereitschaftsbetrieb notwendige Leistung übertragen wird und die sekundärseitig erzeugten Betriebsspannungen abfallen. $U1$ sinkt von +150 V auf +15 V. Gleichzeitig wird die Erdung des Punktes c durch den Fernbedienungsempfänger 18 aufgehoben. Dadurch gelangen über den Kondensator 27 positive Impulse an die Steuerelektrode des Thyristors 28, so daß dieser periodisch gezündet wird. Der Thyristor 28 wirkt als gesteuerter Gleichrichter und erzeugt über die leitende Diode 31 an der Klemme b durch Gleichrichtung der an der Klemme d stehenden abgesenkten Impulsspannung eine Betriebsspannung, die den Fernbedienungsempfänger 18 speist. Die ebenfalls abgesenkte Betriebsspannung am Ausgang des Gleichrichters 20, die für die Steuerung des Fernbedienungsempfän-

gers 18 zu klein wäre, wird durch die Diode 21 von dem
Punkt b entkoppelt. Eine derartige Schaltung ist beschrieben in der älteren Patentanmeldung P 33 23 371.

## Bekannte Schutzschaltung

Die Regelung der Amplitude der Betriebsspannungen U1,U2,U3
erfolgt durch Änderung der Vorspannung an der Steuerelektrode des Thyristors 8. Der Thyristor 8 wird durch die Spannung
Ur am Widerstand 4 gezündet. Zur Erhöhung der Betriebsspannungen wird durch die Regelschaltung die Vorspannung an der
Steuerelektrode des Thyristors 8, also am Punkt e, in negativer Richtung verschoben. Dann müssen die Spannung Ur am
Widerstand 4 und der Strom i1 größere Werte annehmen, um
die Spannung am Punkt e in positiver Richtung bis zum Zündzeitpunkt des Thyristors 8 zu ändern. Durch die Schutzschaltung mit der Diode 35 wird die Vorspannung am Punkt e in
negativer Richtung begrenzt. Der Punkt e kann gegenüber dem
Punkt f nur um -2,8 V negativ werden, so daß der Endwert des
Stromes i1 begrenzt wird. Die Diode 35 ist eine Stapeldiode
vom Typ BZ 102 2V8 mit vier Einzeldioden und einer Flußspannung von 2,8 V. Die Diode 35 kann auch durch eine Zenerdiode ersetzt sein, die dann anders gepolt sein müßte. Als
Diode 35 kann eine normale Diode, z.B. vom Typ 1N 4148 verwendet werden. Der Thyristor 36 und die Diode 50 sind in
allen bisher beschriebenen Betriebsarten gesperrt. Wenn in
der Regelschaltung ein Bauteil ausfällt, z.B. der Koppelkondensator 9 oder der Thyristor 8, ist diese Schutzschaltung nicht mehr wirksam. Der Primärstrom i1 und die erzeugten Betriebsspannungen U1,U2,U2 können dann unzulässig hohe
Werte annehmen und die anderen Bauteile und angeschlossene
Verbraucher gefährden.

## Zusätzliche Strom-Schutzschaltung

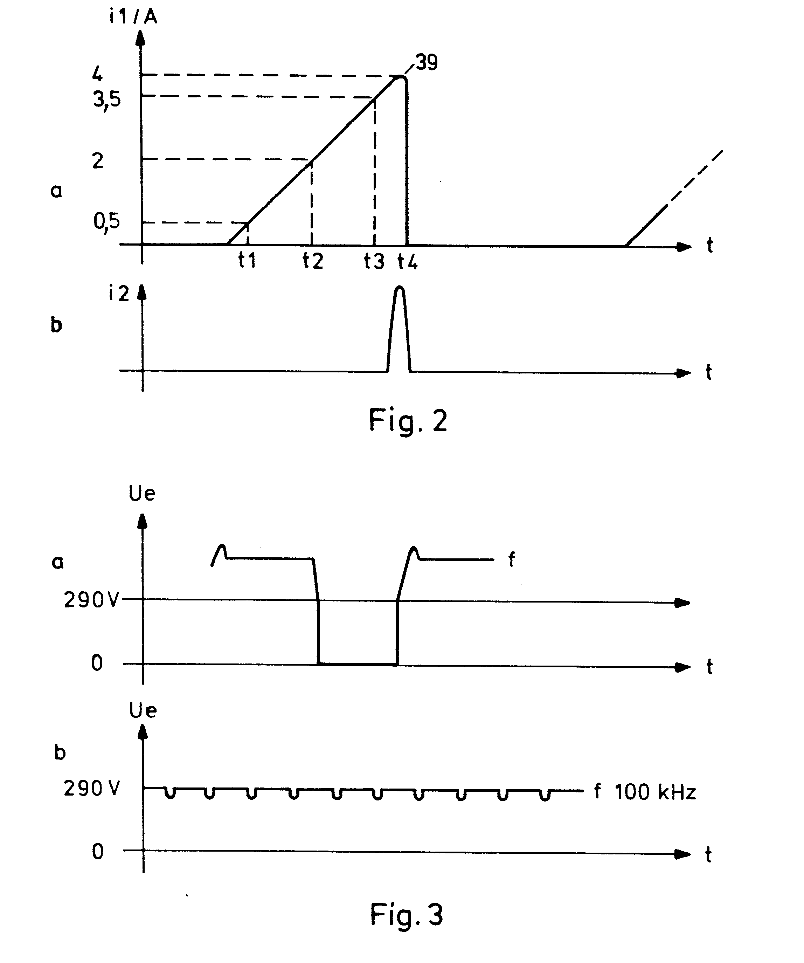

Die zusätzliche Schutzschaltung enthält den Thyristor 36,
den Widerstand 38 und die Diode 50. Die Wirkungsweise wird
anhand der Figur 2 beschrieben. Figur 2a zeigt den periodisch ansteigenden und durch den Transistor 6 abgeschalteten Primärstrom i1. Beim Bereitschaftsbetrieb (stand by) erreicht der Strom i1 nur einen Maximalwert von 0,5 A und wird jeweils im Zeitpunkt t1 abgeschaltet. Bei Normalbetrieb erreicht der Strom i1 jeweils einen Endwert von 2 A und wird jeweils im Zeitpunkt t2 abgeschaltet. Wenn der Strom i1 durch einen Fehler in der Schaltung oder durch sonstige Einflüsse wie zu große Leistungsentnahme, einen unzulässig hohen Wert von 3,5 A erreicht, spricht die Schutzschaltung mit der Zenerdiode 35 an, so daß der Strom im Zeitpunkt t3 abgeschaltet wird und keine höheren Werte annehmen kann. Wenn diese Schutzschaltung nicht mehr wirksam ist, erreicht der Strom i1 zunächst einen höheren Wert von 4 A, was einer Spannung Ur von 4 V am Meßwiderstand 4 entspricht. Bei diesem Spannungswert von Ur wird über die Zenerdiode 35 die als zusätzliches Schwellwert-Element dienende Diode 50 leitend, so daß über den Widerstand 38 der Thyristor 36 an seiner Steuerelektrode gezündet wird. Dadurch wird der in Figur 2b dargestellte impulsförmige Strom i2 ausgelöst, der in erwünschter Weise den Transistor 6 sperrt und einen zu hohen Wert von i1 verhindert. Der Strom i2 gemäß Figur 2b wiederholt sich also periodisch mit der Einschaltfrequenz des Stromes i1. Durch die Kombination der Schutzschaltung mit dem Thyristor 36 mit der Schutzschaltung mit der Zenerdiode 35 ergibt sich eine billige Schaltung, weil die Zenerdiode 35 für beide Schutzschaltungen gemeinsam ausgenutzt ist. Die beiden Schutzschaltungen ergänzen einander auch in dem Sinne, daß nur wenig Leistung umgesetzt wird und auch ein Leistungsverlust durch eine Stromabschaltung mit verrundetem Verlauf, wie in Figur 2a durch die Ziffer 39 angedeutet, weitestgehend vermieden wird.

## Überspannungs-Schutzschaltung

Auch wenn die Primärseite hinsichtlich Stromaufnahme und Leistungsübertragung einwandfrei arbeitet, können auf der Sekundärseite zu hohe Betriebsspannungen entstehen, da diese auch von der angeschlossenen Last abhängig sind. Die Spannung U1 mit ihren Nennwert von 150 V kann dann Werte von 300 V annehmen, so daß in einem Fernsehempfänger u.a. die erzeugte Hochspannung unzulässig groß wird. Auf der Sekundärseite ist daher eine zusätzliche Schutzschaltung mit dem Widerstand 39, der Zenerdiode 40, dem Kondensator 41, dem Thyristor 42 und der Diode 43 vorgesehen. Wenn die Betriebsspannungen innerhalb des zulässigen Bereiches liegen, ist die Zenerdiode 40 durch die Betriebsspannung U2 gesperrt, so daß auch der Thyristor 42 gesperrt bleibt und keinen Einfluß auf die Wicklung 19 hat. Wenn die Betriebsspannungen einen unzulässig hohen Wert annehmen, steuert die Spannung U2 die Zenerdiode 40 leitend und gelangt auf die Steuerelektrode des Thyristors 42, so daß dieser leitend wird. Der Thyristor 42 und die Diode 43 sind für die stromleitende Phase von i1 in Durchlaßrichtung gepolt und stellen daher eine Vorlaufbelastung für den Transformator 1 dar. Dadurch wird die Rückkopplungswicklung 7 praktisch kurzgeschlossen, so daß das Schaltnetzteil nur noch mit sehr kleiner Amplitude schwingt und somit fast keine Leistung mehr überträgt. Eine derartige Schaltung ist näher beschrieben in der älteren Patentanmeldung 32 20 188.5.

Die Diode 43 und der Kondensator 41 in Figur 1 haben zusätzlich folgende vorteilhafte Wirkung. Durch die Diode 43 kann die in Sperrichtung gerichtete Wechselspannung von der Wicklung 19 nicht an den Thyristor 42 gelangen. Der Thyristor bleibt daher im Störungsfall, also bei Einwirkung der Spannung U2 auf seine Steuerelektrode, ständig leitend. Bei einem leitenden Thyristor entsteht, bedingt durch den Aufbau des Thyristors, an der Steuerelektrode eine positive Spannung. Diese Spannung wird mit dem Kondensator 41 (z.B. 100 µF) gespeichert, so daß der Thyristor 42 bis zur nächsten Periode leitend bleibt. Die Schutzschaltung rastet dadurch in vorteilhafter Weise auf Störungsbetrieb ein, bei dem nur noch kleine Spannungs- und Stromimpulse auftreten.
Bei diesem Betrieb wird nur noch eine Leistung von 1 W vom
Netz aufgenommen, so daß dieser Betrieb beliebig lange ohne
nennenswerte Erwärmung von Bauteilen stehen bleiben kann.
Der Kondensator 41 wirkt also als Speicher für eine Spannung,
die in vorteilhafter Weise den Thyristor 42 im Sinne der
beschriebenen Schutzfunktion gegen Überspannung leitend hält.

Figur 3a zeigt die Impulsspannung am Punkt f, also am Kollektor des Schalttransistors 6, bei Normalbetrieb. Während der
stromleitenden Phase ist diese Spannung praktisch null, wobei
als primärseitiger Massepunkt mit dem Potential null der Punkt
g angesehen wird. Dabei ist der Spannungsabfall am Meßwiderstand 4 vernachlässigt.

Figur 3b zeigt die Verhältnisse bei angesprochener Schutzschaltung 39-43. Es fliessen jetzt nur noch ganz geringfügige Stromimpulse i1 mit einer Frequenz von 100 kHz, so daß
die Spannung am Punkt f nur noch geringfügig abfällt. Bei
diesem Betrieb liegt praktisch kein Impulsbetrieb mehr vor,
und es wird nur noch eine minimale Leistung von etwa 1 W
vom Netz aufgenommen. Die Schaltung ist jetzt in einen Störungsfall eingerastet, der ohne Gefährdung von Bauteilen
und ohne unerwünscht hohe Leistungsaufnahme vom Netz beliebig lange stehenbleiben kann. Er wird erst dann aufgehoben,
wenn das Gerät an den Netzklemmen aus- und wieder eingeschaltet wird.

T E L E F U N K E N
Fernseh und Rundfunk G m b H
Göttinger Chaussee 76

3000 Hannover 91


Hannover, den 03.11.1983
PTL-Wp/rs          H 83/77


## Patentansprüche

1. Schaltnetzteil, insbesondere für einen Fernsehempfänger, mit einem den Strom in der Primärwicklung (5) periodisch ein- und ausschaltenden Schalttransistor (6) und mit einer Schutzschaltung zur Begrenzung des Primärstroms (i1), dadurch gekennzeichnet, daß eine dem Primärstrom (i1) proportionale Referenzspannung (Ur) über ein Schwellwert-Element (35) an die Steuerelektrode eines Thyristors (36) angelegt ist, der zwischen der Basis des Schalttransistors (6) und einem Punkt (g) mit einer Sperrspannung für den Transistor (6) liegt.

2. Netzteil nach Anspruch 1, dadurch gekennzeichnet, daß die beiden Enden eines im Weg des Primärstromes (i1) liegenden Strom-Meßwiderstandes (4) an das der Basis des Schalttransistors (6) abgewandte Ende des Thyristors (36) bzw. über das Schwellwert-Element (35) an die Steuerelektrode des Thyristors (36) angeschlossen sind.

3. Netzteil nach Anspruch 1, dadurch gekennzeichnet, daß das Schwellwert-Element eine Zenerdiode (35) ist.

0143359

4. Netzteil nach Anspruch 3, <u>dadurch gekennzeichnet</u>, daß als Schwellwert-Element die Zenerdiode (35) einer zusätzlichen Schutzschaltung ausgenutzt ist, die an die Steuerelektrode eines zweiten, periodisch gezündeten und den Schalttransistor (6) steuernden Thyristors (8) angeschlossen ist.

5. Netzteil nach einem oder mehreren der Ansprüche 1-4, <u>dadurch gekennzeichnet</u>, daß zwischen dem Schwellwert-Element (35) und der Steuerelektrode des Thyristors (36) ein weiteres Schwellwert-Element (50) liegt.

6. Netzteil nach Anspruch 1, <u>dadurch gekennzeichnet</u>, daß an eine Sekundärwicklung (19) des Trenntransformators (1) ein für die stromführende Phase des Schalttransistors (6) in Durchlaßrichtung gepolter dritter Thyristor (42) angeschlossen und an dessen Steuerelektrode eine sekundärseitig erzeugte Betriebsspannung (U2) angelegt ist, die bei einem unzulässigen Anstieg der Betriebsspannung (U2) den Thyristor (42) zündet.

7. Netzteil nach Anspruch 6, <u>dadurch gekennzeichnet</u>, daß zwischen der Sekundärwicklung (19) und dem dritten Thyristor (42) eine für die stromführende Phase des Schalttransistors (6) in Durchlaßrichtung gepolte Diode (43) liegt.

8. Netzteil nach Anspruch 7, <u>dadurch gekennzeichnet</u>, daß zwischen der Steuerelektrode des dritten Thyristors (42) und der sekundärseitigen Masse ein Kondensator (41) liegt.

9. Netzteil nach Anspruch 8, <u>dadurch gekennzeichnet</u>, daß als Kondensator (41) die Eigenkapazität des Thyristors (42) ausgenutzt ist.

0143359

10. Netzteil nach Anspruch 6, <u>dadurch gekennzeichnet</u>, daß zwischen der Betriebsspannungsklemme (b) und der Steuerelektrode des dritten Thyristors (42) eine Zenerdiode (40) liegt, die bei einem unzulässigen Anstieg der Betriebsspannung (U2) in den Durchbruch gelangt.

Fig. 1

0143359

2/2 0143359

Fig. 2

Fig. 3

0143359
Nummer der Anmeldung

**Europäisches Patentamt**

# EUROPÄISCHER RECHERCHENBERICHT

EP 84 11 3165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 096 300 (LICENTIA) <br><br> * Seite 4, Zeile 24 - Seite 6, Zeile 20 * <br><br> --- | 1,6-9 | H 02 M 3/335 |
| A,D | FUNKSCHAU, Heft 5, 1975, Seiten 40-43, MÜNCHEN (DE). R. DANGSCHAT et al:" Ein Sperr-wandler-Netzmodul mit Netztren-nung". <br><br> * Seiten 41-43 * <br><br> --- | 1 | |
| A | US-A-4 316 242 (COLANGELO et al) <br><br> * Figur 1 * <br><br> ----- | 3-5,10 | |

| | RECHERCHIERTE SACHGEBIETE (Int. Cl.4) |
|---|---|
| | H 02 M 3/00 |

Der vorliegende Recherchenbericht wurde für alle Patentansprüche erstellt.

| Recherchenort | Abschlußdatum der Recherche | Prüfer |
|---|---|---|
| DEN HAAG | 07-02-1985 | BERTIN M.H.J. |